# EUROPEAN PATENT APPLICATION

(11) **EP 3 975 436 A1**
(43) Date of publication of application: **30.03.2022**
(21) Application number: 20833029.0
(22) Date of filing: 22.06.2020
(51) Int. Cl.: H04B 1/401, H04B 7/0404, H04B 7/06, H04B 7/08, H04W 72/08, H04W 88/06

(54) **COMMUNICATION CONTROL METHOD AND APPARATUS, AND ELECTRONIC DEVICE**

(30) Priority: 25.06.2019 CN 201910557000
(71) Applicant: GUANGDONG OPPO MOBILE TELECOMMUNICATIONS CORP., LTD., Dongguan, Guangdong 523860 (CN)
(72) Inventor: YANG, Xin, Dongguan, Guangdong 523860 (CN)
(74) Representative: Mewburn Ellis LLP
(86) International application number: PCT/CN2020/097506
(87) International publication number: WO 2020/259446

(57) **Abstract**

Implementations of the disclosure provide a method and device for communication control, which are applicable to an electronic device. If a cellular communication module has a diversity requirement, a diversity antenna is coupled with a cellular diversity RF channel. The cellular communication module transmits first feedback information to an LPWAN communication module. The LPWAN communication module is controlled to stop signal transmission or signal reception, when the first feedback information is received by the LPWAN communication module. In this way, by transmitting the first feedback information indicative of that the diversity antenna is occupied to the LPWAN communication module through the cellular communication module, the communication quality of the cellular communication module can be ensured when a cellular communication mode and an LPWAN communication mode can be used simultaneously.

## Description

### TECHNICAL FIELD

This disclosure relates to the technical field of communication, and more particularly to a method for communication control and related products.

### BACKGROUND

With the popularization of electronic devices (such as mobile phones, tablet computers, etc.), the electronic device can support an increasing number of applications and are becoming more powerful. The electronic device is becoming diversified and personalized, and becomes an essential electronic product in users' lives.

At present, radio frequency (RF) front-end circuits of most electronic devices use cellular networks, short-range RF technologies, and the like. The short-range RF technologies include wireless fidelity (Wi-Fi) technology, bluetooth (BT) technology, global positioning system (GPS) technology, and frequency modulation (FM) technology. However, the RF front-end circuits of the electronic devices rarely use low-power wide-area network (LPWAN) technology. The LPWAN technology is an internet of things (IoT) network layer technology for long-distance and low-power communication requirements of the IoT.

### SUMMARY

Implementations of the disclosure provide a method for communication control and related products, to ensure communication quality of a cellular communication module on condition that a cellular communication mode and a low-power wide-area network (LPWAN) communication mode can be used simultaneously.

In a first aspect, implementations of the disclosure provide a method for communication control. The method is applicable to an electronic device. The electronic device includes a cellular communication module, an LPWAN communication module, a primary module, a diversity module, a primary antenna, and a diversity antenna. The cellular communication module is coupled with the primary module to form a cellular primary radio frequency (RF) channel, and the cellular communication module is coupled with the diversity module to form a cellular diversity RF channel. The LPWAN communication module is coupled with the diversity module to form an LPWAN RF channel, and the cellular primary RF channel is coupled with the primary antenna. The method includes the following.

When the cellular communication module has a diversity requirement, the diversity antenna is coupled with the cellular diversity RF channel. The cellular communication module transmits first feedback information to the LPWAN communication module, where the first feedback information is indicative of that the diversity antenna is occupied by the cellular diversity RF channel. The LPWAN communication module is controlled to stop signal transmission or signal reception, in response to the first feedback information being received by the LPWAN communication module.

In a second aspect, implementations of the disclosure provide a device for communication control. The device is applicable to an electronic device. The electronic device includes a cellular communication module, an LPWAN communication module, a primary module, a diversity module, a primary antenna, and a diversity antenna. The cellular communication module is coupled with the primary module to form a cellular primary radio frequency (RF) channel, and the cellular communication module is coupled with the diversity module to form a cellular diversity RF channel. The LPWAN communication module is coupled with the diversity module to form an LPWAN RF channel, and the cellular primary RF channel is coupled with the primary antenna. The device includes a control unit and a transmitting unit.

The control unit is configured to couple the diversity antenna with the cellular diversity RF channel, on condition that the cellular communication module has a diversity requirement. The transmitting unit is configured to transmit, through the cellular communication module, first feedback information to the LPWAN communication module, where the first feedback information indicates that the diversity antenna is occupied by the cellular diversity RF channel. The control unit is further configured to control the LPWAN communication module to stop signal transmission or signal reception, in response to the first feedback information being received by the LPWAN communication module.

In a third aspect, implementations of the disclosure provide an electronic device. The electronic device includes a cellular communication module, an LPWAN communication module, a primary module, a diversity module, a primary antenna, a diversity antenna, a processor, a memory configured to store one or more programs, and a communication interface. The one or more programs are configured to be executed by the processor and include instructions configured to perform all or part of the operations of any of the methods described in the above-described first aspect of the implementations.

In a fourth aspect, implementations of the disclosure provide a computer-readable storage medium. The computer-readable storage medium is configured to store computer programs, where the computer programs are operable with a computer to perform all or part of the operations of any of the methods described in the above-described first aspect of the implementations.

In a fifth aspect, implementations of the disclosure provide a computer program product. The computer program product includes a non-transitory computer-readable storage medium that stores computer programs. The computer programs are operable with a computer to perform all or part of the operations of any of the methods described in the above-described first aspect of the implementations. The computer program product may be a software installation package.

### BRIEF DESCRIPTION OF THE DRAWINGS

To describe technical solutions of implementations of the disclosure or the related art more clearly, the following will give a brief description of accompanying drawings used for describing the implementations of the disclosure or the related art. Apparently, the accompanying drawings described in the following are merely some implementations of the disclosure. Those of ordinary skill in the art can also obtain other accompanying drawings based on the accompanying drawings described below without creative efforts.
FIG. 1A is a schematic structural diagram illustrating an electronic device provided in implementations of the disclosure.
FIG. 1B is a schematic flow chart illustrating a method for communication control provided in implementations of the disclosure.
FIG. 2 is a schematic flow chart illustrating a method for communication control provided in other implementations of the disclosure.
FIG. 3 is a schematic flow chart illustrating a method for communication control provided in other implementations of the disclosure.
FIG. 4 is a schematic structural diagram illustrating an electronic device provided in other implementations of the disclosure.
FIG. 5A is a schematic structural diagram illustrating a device for communication control provided in implementations of the disclosure.
FIG. 5B illustrates a variant structure of the device for communication control illustrated in FIG. 5A provided in implementations of the disclosure.
FIG. 6 is a schematic structural diagram illustrating an electronic device provided in other implementations of the disclosure.

### DETAILED DESCRIPTION

In order to enable those skilled in the art to better understand solutions of the disclosure, technical solutions embodied in implementations of the disclosure will be described in a clear and comprehensive manner in conjunction with accompanying drawings. It is evident that the implementations described herein are merely some rather than all of the implementations of the disclosure. All other implementations obtained by those of ordinary skill in the art based on the implementations of the disclosure without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

The term "implementation" referred to herein means that a particular feature, structure, or feature described in conjunction with the implementation may be contained in at least one implementation of the disclosure. The phrase appearing in various places in the specification does not necessarily refer to the same implementations, nor does it refer to an independent or alternative implementation that is mutually exclusive with other implementations. It is expressly and implicitly understood by those skilled in the art that an implementation described herein may be combined with other implementations.

The electronic devices involved in the implementations of the disclosure may include various handheld devices, vehicle-mounted devices, wearable devices, computing devices that have wireless communication functions or other processing devices connected to wireless modems, as well as various forms of user equipment (UE), mobile stations (MS), terminal devices, and the like, and the like. The electronic device may be, for example, a smart phone, a tablet computer, an earphone box, and the like. For convenience of description, the devices mentioned above are collectively referred to as electronic devices.

In implementations of the disclosure, low-power wide-area network (LPWAN) uses industrial scientific medical (ISM) frequency bands, for example for communication technologies such as long range (LoRa^{®}), Sigfox^{®}, and the like, a wide area network can be constituted without relying on base stations. Therefore, a radio frequency (RF) front-end circuit of the electronic device can adopt LoRa, Sigfox, Weightless^{®}, or other communication technologies to achieve good communication effect.

LoRa, a low-power networking technology developed by Sem Tech^{®}, is a long-range wireless transmission technology based on spread-spectrum techniques and mainly operates on ISM common frequencies.

Sigfox is a low-power wide-area (LPWA) technology featuring long-range, low-power, and low transmission rate. Sigfox uses ultra-narrow band (UNB) technology and mainly operates on the ISM common frequencies.

Hereinafter, the implementations of the disclosure will be described in detail.

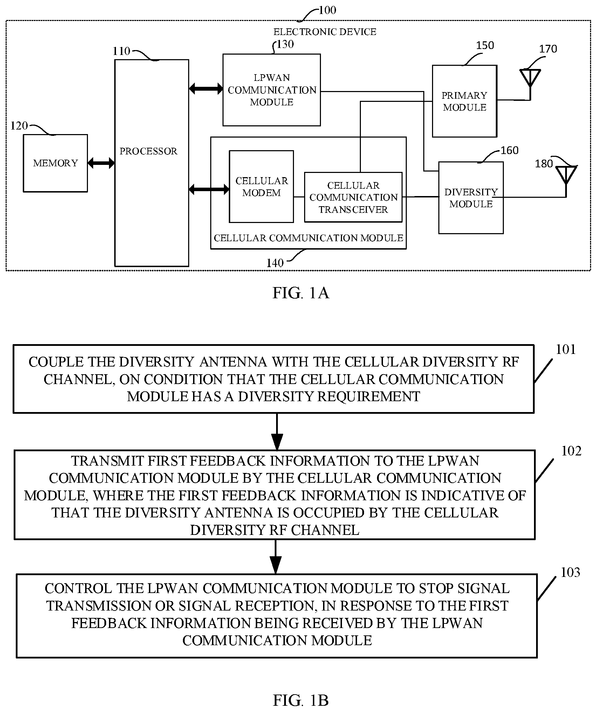

FIG. 1A is a schematic structural diagram illustrating an electronic device 100 provided in implementations of the disclosure. As illustrated in FIG. 1A, the electronic device 100 includes a processor 110, a memory 120, a low-power wide-area network (LPWAN) communication module 130, a cellular communication module 140, a primary module 150, a diversity module 160, a primary antenna 170, and a diversity antenna 180. The cellular communication module 140 is coupled with the primary module 150 to form a cellular primary RF channel, and the cellular communication module 140 is coupled with the diversity module 160 to form a cellular diversity RF channel. The LPWAN communication module 130 is coupled with the diversity module 160 to form an LPWAN RF channel. The cellular primary RF channel is coupled with the primary antenna.

The memory 120 is coupled with the processor 110. The cellular communication module 140 includes a cellular communication transceiver and a cellular modem. The cellular modem is coupled with the processor 110, and the cellular communication transceiver is coupled with the primary module 150 and the diversity module 160.

The processor is configured to control the diversity antenna to be coupled with the cellular diversity RF channel, on condition that the cellular communication module has a diversity requirement.

The cellular communication module is configured to transmit first feedback information to the LPWAN communication module, where the first feedback information is indicative of that the diversity antenna is occupied by the cellular diversity RF channel.

The processor is further configured to control the LPWAN communication module to stop signal transmission or signal reception, in response to the first feedback information being received by the LPWAN communication module.

In at least one implementation, the processor is further configured to obtain a target operation request, and determine that the cellular communication module has the diversity requirement, in response to the target operation request being in a preset request list corresponding to the cellular communication module, where the target operation request is received from a base station or triggered in response to a touch instruction.

In at least one implementation, the cellular communication module configured to transmit the first feedback information to the LPWAN communication module is configured to transmit the first feedback information to the processor, and the processor is configured to forward the first feedback information to the LPWAN communication module.

In at least one implementation, the processor is further configured to control the diversity antenna to be coupled with the LPWAN RF channel, on condition that the cellular communication module terminates usage of the diversity antenna. The cellular communication module is further configured to transmit second feedback information to the LPWAN communication module, where the second feedback information indicates that the diversity antenna is released from the cellular diversity RF channel. The processor is further configured to control the LPWAN communication module to restore signal transmission or signal reception, in response to the second feedback information being received by the LPWAN communication module.

In at least one implementation, the processor is further configured to obtain a first operating frequency band of the cellular communication module and a second operating frequency band of the LPWAN communication module in response to signal interference between the cellular primary RF channel and the LPWAN RF channel, on condition that the diversity antenna is coupled with the LPWAN RF channel. The processor is further configured to determine multiple operating frequencies within a third operating frequency band, in response to the second operating frequency band falling within the first operating frequency band, where the third operating frequency band falls within the first operating frequency band, and the third operating frequency band is not overlapped with the second operating frequency band. The processor is further configured to obtain a historical usage frequency corresponding to each of the multiple operating frequencies to obtain multiple historical usage frequencies, determine a target operating frequency, and control the cellular communication module to adjust an operating frequency of the cellular communication module to be the target operating frequency, where the historical usage frequency corresponding to the target operating frequency is a minimum historical usage frequency among the multiple historical usage frequencies.

In at least one implementation, the diversity requirement includes at least one of: data transmission, incoming call reception, phone call, or network searching.

FIG. 1B is a schematic flow chart illustrating a method for communication control provided in implementations of the disclosure, which is implemented in the electronic device illustrated in FIG. 1A. The electronic device includes the cellular communication module, the LPWAN communication module, the primary module, the diversity module, the primary antenna, and the diversity antenna. The cellular communication module is coupled with the primary module to form the cellular primary RF channel, and the cellular communication module is coupled with the diversity module to form the cellular diversity RF channel. The LPWAN communication module is coupled with the diversity module to form an LPWAN RF channel, and the cellular primary RF channel is coupled with the primary antenna. As illustrated in FIG. 1B, the method includes the following.

At block 101, when the cellular communication module has a diversity requirement, the diversity antenna is coupled with the cellular diversity RF channel.

The diversity requirement includes at least one of: data transmission, incoming call reception, phone call, network searching, or the like.

In implementations of the disclosure, according to FIG. 1A, it can be seen that the LPWAN RF channel and the cellular diversity RF channel share a diversity antenna. By coupling the diversity antenna with the cellular diversity RF channel or the LPWAN RF channel, there is no need to provide a separate antenna for the LPWAN RF channel. In one example, the diversity antenna is coupled with the cellular diversity RF channel. The diversity module can be provided with a single-pole multi-throw switch. A terminal of the single-pole multi-throw switch is coupled with the diversity antenna, and another terminal of the single-pole multi-throw switch can be coupled with the LPWAN RF channel or the cellular diversity RF channel. Thus, coupling the diversity antenna with the cellular diversity RF channel can be achieved through switching of the single-pole multi-throw switch in the diversity module.

When the electronic device needs to conduct data transmission, incoming call reception, phone call, or other operations, it indicates that the cellular communication module has the diversity requirement, that is, the cellular communication module may use the diversity antenna, and thus the diversity antenna can be coupled with the cellular diversity RF channel, such that a communication function of the cellular diversity RF channel can be used.

In one example, couple the diversity antenna with the cellular diversity RF channel as follows. The diversity module is controlled to conduct switching to enable the diversity antenna to be coupled with the cellular diversity RF channel, and an antenna tuner is controlled to switch to a state required by a current communication frequency band of the cellular communication module.

In implementations of the disclosure, the method further includes the following.

At A1, a target operation request is obtained, where the target operation request is received from a base station or triggered in response to a touch instruction.

At A2, determine that the cellular communication module has the diversity requirement, in response to the target operation request being in a preset request list corresponding to the cellular communication module.

The target operation request may include at least one of: an incoming call request sent by the base station, a data transmission request sent by the base station, a phone call request triggered by a user through the electronic device, a video chat request, a data transmission request triggered by the user through the electronic device, a network searching request, or the like.

In implementations of the disclosure, the preset request list can be created and the preset request list includes multiple preset requests. If the target operation request is consistent with any preset request in the preset request list, it can be determined that the target operation request is in the preset request list, and therefore it can be determined that the cellular communication module has the diversity requirement.

At block 102, the cellular communication module transmits first feedback information to the LPWAN communication module, where the first feedback information is indicative of that the diversity antenna is occupied by the cellular diversity RF channel.

In implementations of the disclosure, the cellular communication module transmits the first feedback information to the LPWAN communication module, to remind the LPWAN communication module that the diversity antenna is currently unavailable for the LPWAN communication module.

In one example, if the cellular communication module is coupled with the LPWAN communication module, the cellular communication module can directly transmit the first feedback information to the LPWAN communication module.

Alternatively, in operations at 102, the cellular communication module transmits the first feedback information to the LPWAN communication module as follows.

At 21, the cellular communication module transmits the first feedback information to the processor.

At 22, the processor forwards the first feedback information to the LPWAN communication module.

The cellular communication module and the LPWAN communication module are respectively coupled with the processor. Therefore, the cellular communication module can first transmit the first feedback information to the processor, and then the processor forwards the first feedback information to the LPWAN communication module.

At block 103, the LPWAN communication module is controlled to stop signal transmission or signal reception, in response to the first feedback information being received by the LPWAN communication module.

In implementations of the disclosure, once the LPWAN communication module receives the first feedback information, the LPWAN communication module is controlled to stop signal transmission or signal reception, thereby preventing the LPWAN communication module from interfering with the operation of the cellular communication module.

In at least one implementation, the method further includes the following.

At B1, couple the diversity antenna with the LPWAN RF channel, once the cellular communication module terminates usage of the diversity antenna.

At B2, the cellular communication module transmits second feedback information to the LPWAN communication module, where the second feedback information indicates that the diversity antenna is released from the cellular diversity RF channel.

At B3, the LPWAN communication module is controlled to restore signal transmission or signal reception, in response to the second feedback information being received by the LPWAN communication module.

In implementations of the disclosure, when the cellular communication module terminates the usage of the diversity antenna, for example, a data transmission task or a call task of the electronic device is completed, the cellular communication module can transmit the second feedback information to the LPWAN communication module, to remind the LPWAN communication module that the diversity antenna is currently available for the LPWAN communication module. Thereafter, the diversity module can be controlled to conduct switching to enable the diversity antenna to be coupled with the LPWAN RF channel, and the antenna tuner can be controlled to switch to a state required for a current communication frequency band of the LPWAN communication module. When the LPWAN communication module receives the second feedback information, the LPWAN communication module is controlled to restore signal transmission or signal reception, so that the LPWAN communication module can use the diversity antenna.

In at least one implementation, on condition that the diversity antenna is coupled with the LPWAN RF channel, the method further includes the following.

At C1, a first operating frequency band of the cellular communication module and a second operating frequency band of the LPWAN communication module are obtained, in response to signal interference between the cellular primary RF channel and the LPWAN RF channel.

At C2, if the second operating frequency band falls within the first operating frequency band, multiple operating frequencies within a third operating frequency band are determined, where the third operating frequency band falls within the first operating frequency band and the third operating frequency band is not overlapped with the second operating frequency band.

At C3, a historical usage frequency corresponding to each of the multiple operating frequencies is obtained to obtain multiple historical usage frequencies.

At C4, a target operating frequency is determined, where the historical usage frequency corresponding to the target operating frequency is a minimum historical usage frequency among the multiple historical usage frequencies.

At C5, an operating frequency of the cellular communication module is adjusted to be the target operating frequency.

In implementations of the disclosure, if the diversity antenna is coupled with the LPWAN RF channel, the LPWAN communication module can use the diversity antenna. That is, the LPWAN RF channel and the cellular primary RF channel can work simultaneously. If there is signal interference between the cellular primary RF channel and the LPWAN RF channel, the signal interference may affect communication quality of the cellular primary RF channel and the LPWAN RF channel. Therefore, the first operating frequency band of the cellular communication module and the second operating frequency band of the LPWAN communication module can be obtained. If the second operating frequency band falls within the first operating frequency band, the multiple operating frequencies within the third operating frequency band are determined. The historical usage frequency corresponding to each of the multiple operating frequencies is obtained to obtain the multiple historical usage frequencies, and the target operating frequency is determined, where the historical usage frequency corresponding to the target operating frequency is the minimum historical usage frequency among the multiple historical usage frequencies. Thereafter, the operating frequency of the cellular communication module is adjusted to be the target operating frequency, to eliminate the signal interference between the cellular primary RF channel and the LPWAN RF channel.

The method for communication control in implementations of the disclosure is applied to the electronic device. If the cellular communication module has the diversity requirement, the diversity antenna is coupled with the cellular diversity RF channel. The cellular communication module transmits the first feedback information to the LPWAN communication module. When the LPWAN communication module receives the first feedback information, the LPWAN communication module is controlled to stop signal transmission or signal reception. In this way, by transmitting the first feedback information indicative of that the diversity antenna is occupied to the LPWAN communication module through the cellular communication module, the communication quality of the cellular communication module can be ensured when a cellular communication mode and an LPWAN communication mode can be used simultaneously.

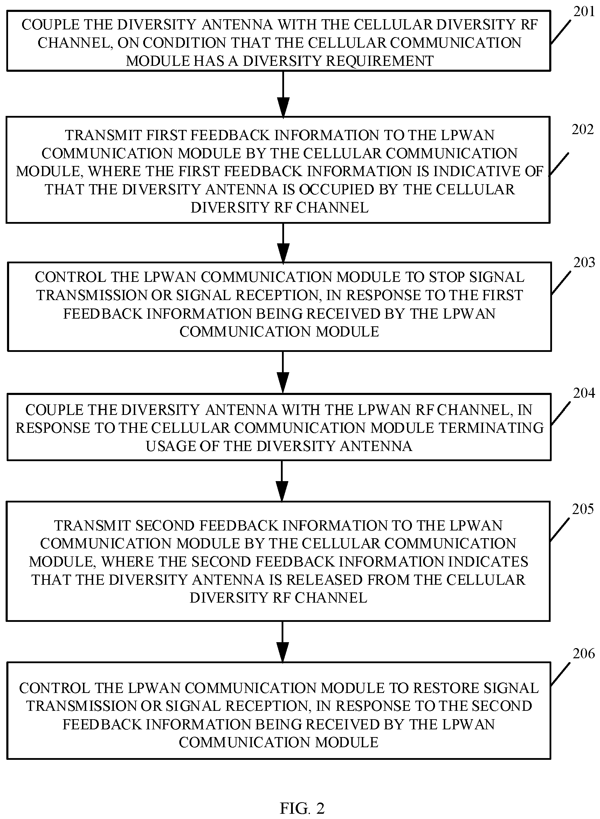

FIG. 2 is a schematic flow chart illustrating a method for communication control provided in other implementations of the disclosure, which is implemented in the electronic device illustrated in FIG. 1A. The electronic device includes the cellular communication module, the LPWAN communication module, the primary module, the diversity module, the primary antenna, and the diversity antenna. The cellular communication module is coupled with the primary module to form the cellular primary RF channel, and the cellular communication module is coupled with the diversity module to form the cellular diversity RF channel. The LPWAN communication module is coupled with the diversity module to form the LPWAN RF channel, and the cellular primary RF channel is coupled with the primary antenna. As illustrated in FIG. 2, the method includes the following.

At block 201, when the cellular communication module has a diversity requirement, the diversity antenna is coupled with the cellular diversity RF channel.

At block 202, the cellular communication module transmits first feedback information to the LPWAN communication module, where the first feedback information is indicative of that the diversity antenna is occupied by the cellular diversity RF channel.

At block 203, the LPWAN communication module is controlled to stop signal transmission or signal reception, when the first feedback information is received by the LPWAN communication module.

At block 204, once the cellular communication module terminates usage of the diversity antenna, couple the diversity antenna with the LPWAN RF channel.

At block 205, the cellular communication module transmits second feedback information to the LPWAN communication module, where the second feedback information indicates that the diversity antenna is released from the cellular diversity RF channel.

At block 206, the LPWAN communication module is controlled to restore signal transmission or signal reception, when the second feedback information is received by the LPWAN communication module.

For specific implementation process of the above operations at block 201 to 206, reference may be made to the corresponding description in the operations at block 101 to 103, which are not repeated herein.

The method for communication control in implementations of the disclosure is applied to the electronic device. If the cellular communication module has the diversity requirement, the diversity antenna is coupled with the cellular diversity RF channel. The cellular communication module transmits the first feedback information indicative of that the diversity antenna is occupied to the LPWAN communication module. When the LPWAN communication module receives the first feedback information, the LPWAN communication module is controlled to stop signal transmission or signal reception. When the cellular communication module terminates the usage of the diversity antenna, couple the diversity antenna with the LPWAN RF channel, and the cellular communication module transmits the second feedback information indicative of that the diversity antenna is released to the LPWAN communication module. When the second feedback information is received by the LPWAN communication module, the LPWAN communication module is controlled to restore signal transmission or signal reception. In this way, by transmitting the first feedback information indicative of that the diversity antenna is occupied or the second feedback information indicative of that the diversity antenna is released to the LPWAN communication module through the cellular communication module, the communication quality of the cellular communication module can be ensured when the cellular communication mode and the LPWAN communication mode can be used simultaneously.

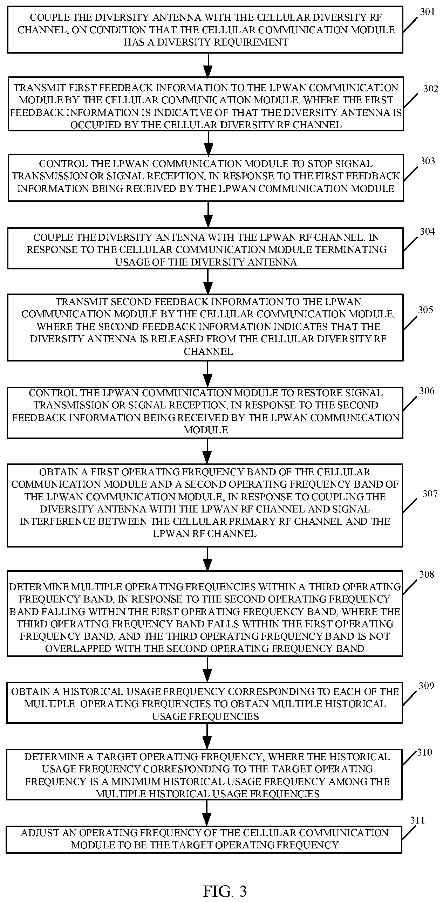

Similar to the above implementations, FIG. 3 is a schematic flow chart illustrating a method for communication control provided in other implementations of the disclosure, which is implemented in the electronic device illustrated in FIG. 1A. The electronic device includes the cellular communication module, the LPWAN communication module, the primary module, the diversity module, the primary antenna, and the diversity antenna. The cellular communication module is coupled with the primary module to form the cellular primary RF channel, and the cellular communication module is coupled with the diversity module to form the cellular diversity RF channel. The LPWAN communication module is coupled with the diversity module to form an LPWAN RF channel, and the cellular primary RF channel is coupled with the primary antenna. As illustrated in FIG. 3, the method includes the following.

At block 301, if the cellular communication module has a diversity requirement, the diversity antenna is coupled with the cellular diversity RF channel.

At block 302, the cellular communication module transmits first feedback information to the LPWAN communication module, where the first feedback information is indicative of that the diversity antenna is occupied by the cellular diversity RF channel.

At block 303, the LPWAN communication module is controlled to stop signal transmission or signal reception, when the first feedback information is received by the LPWAN communication module.

At block 304, once the cellular communication module terminates usage of the diversity antenna, couple the diversity antenna with the LPWAN RF channel.

At block 305, the cellular communication module transmits second feedback information to the LPWAN communication module, where the second feedback information indicates that the diversity antenna is released from the cellular diversity RF channel.

At block 306, the LPWAN communication module is controlled to restore signal transmission or signal reception, when the second feedback information is received by the LPWAN communication module.

At block 307, when the diversity antenna is coupled with the LPWAN RF channel, if there is signal interference between the cellular primary RF channel and the LPWAN RF channel, a first operating frequency band of the cellular communication module and a second operating frequency band of the LPWAN communication module are obtained.

At block 308, if the second operating frequency band falls within the first operating frequency band, multiple operating frequencies within a third operating frequency band are determined, where the third operating frequency band falls within the first operating frequency band and the third operating frequency band is not overlapped with the second operating frequency band.

At block 309, a historical usage frequency corresponding to each of the multiple operating frequencies is obtained to obtain multiple historical usage frequencies.

At block 310, a target operating frequency is determined, where the historical usage frequency corresponding to the target operating frequency is a minimum historical usage frequency among the multiple historical usage frequencies.

At block 311, an operating frequency of the cellular communication module is adjusted to be the target operating frequency.

For specific implementation process of the above operations at block 301 to 311, reference may be made to the corresponding description in the operations at block 101 to 103, which are not repeated herein.

As can be seen, the method for communication control in implementations of the disclosure is applied to the electronic device. If the cellular communication module has the diversity requirement, the diversity antenna is coupled with the cellular diversity RF channel. The cellular communication module transmits the first feedback information indicative of that the diversity antenna is occupied to the LPWAN communication module. When the LPWAN communication module receives the first feedback information, the LPWAN communication module is controlled to stop signal transmission or signal reception. When the cellular communication module terminates the usage of the diversity antenna, couple the diversity antenna with the LPWAN RF channel, and the cellular communication module transmits the second feedback information indicative of that the diversity antenna is released to the LPWAN communication module. When the second feedback information is received by the LPWAN communication module, the LPWAN communication module is controlled to restore signal transmission or signal reception. If there is the signal interference between the cellular primary RF channel and the LPWAN RF channel, the first operating frequency band of the cellular communication module and the second operating frequency band of the LPWAN communication module are obtained, and the multiple operating frequencies within a third operating frequency band are determined. The historical usage frequency corresponding to each of the multiple operating frequencies is obtained to obtain the multiple historical usage frequencies, and the target operating frequency is determined, where the historical usage frequency corresponding to the target operating frequency is the minimum historical usage frequency among the multiple historical usage frequencies. Thereafter, the operating frequency of the cellular communication module is adjusted to be the target operating frequency. In this way, by transmitting the first feedback information indicative of that the diversity antenna is occupied or the second feedback information indicative of that the diversity antenna is released to the LPWAN communication module through the cellular communication module, the communication quality of the cellular communication module can be ensured when the cellular communication mode and the LPWAN communication mode can be used simultaneously. In addition, the signal interference between the cellular primary RF channel and the LPWAN RF channel can be eliminated.

The following are devices that implement the above method for communication control.

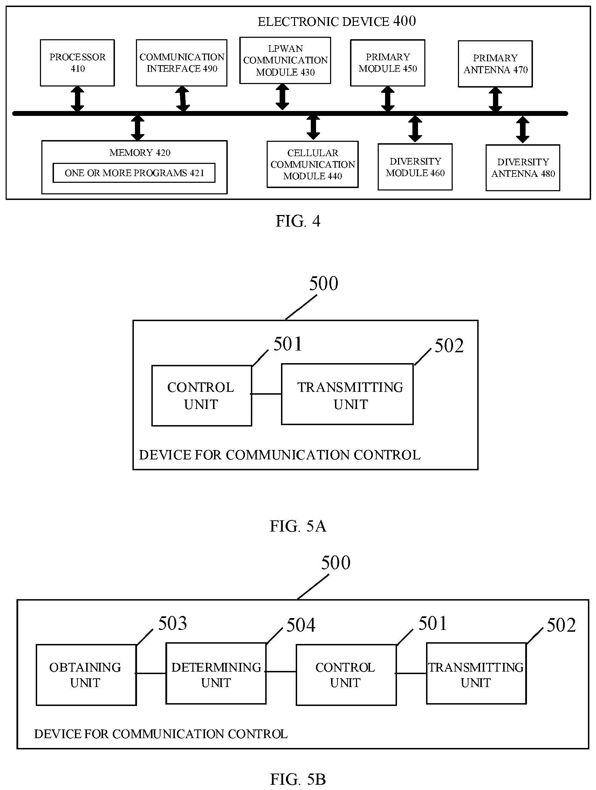

Similar to the above implementations, FIG. 4 is a schematic structural diagram illustrating an electronic device provided in other implementations of the disclosure. The electronic device includes a processor 410, a LPWAN communication module 430, a cellular communication module 440, a primary module 450, a diversity module 460, a primary antenna 470, a diversity antenna 480, a communication interface 490, and a memory 420 configured to store one or more programs 421. The one or more programs 421 are configured to be executed by the processor and include instructions configured to execute the following. If the cellular communication module has a diversity requirement, the diversity antenna is coupled with the cellular diversity RF channel. First feedback information is transmitted to the LPWAN communication module through the cellular communication module, where the first feedback information is indicative of that the diversity antenna is occupied by the cellular diversity RF channel. The LPWAN communication module is controlled to stop signal transmission or signal reception, when the first feedback information is received by the LPWAN communication module.

In at least one implementation, the one or more programs 421 further include instructions configured to execute the following operations. A target operation request is obtained, where the target operation request is received from a base station or triggered in response to a touch instruction. If the target operation request is in a preset request list corresponding to the cellular communication module, determine that the cellular communication module has the diversity requirement.

In at least one implementation, the electronic device further includes the processor, and in terms of transmitting, by the cellular communication module, the first feedback information to the LPWAN communication module, the instructions of the one or more programs 421 are configured to execute the following operations. The first feedback information is transmitted to the processor through the cellular communication module, and the first feedback information is forwarded to the LPWAN communication module through the processor.

In at least one implementation, the one or more programs 421 further include instructions configured to execute the following operations. Once the cellular communication module terminates usage of the diversity antenna, couple the diversity antenna with the LPWAN RF channel. Second feedback information is transmitted to the LPWAN communication module through the cellular communication module, where the second feedback information indicates that the diversity antenna is released from the cellular diversity RF channel. When the second feedback information is received by the LPWAN communication module, the LPWAN communication module is controlled to restore signal transmission or signal reception.

In at least one implementation, on condition that the diversity antenna is coupled with the LPWAN RF channel, the one or more programs 421 further include instructions configured to execute the following operations. If there is signal interference between the cellular primary RF channel and the LPWAN RF channel, a first operating frequency band of the cellular communication module and a second operating frequency band of the LPWAN communication module are obtained. If the second operating frequency band falls within the first operating frequency band, multiple operating frequencies within a third operating frequency band are determined, where the third operating frequency band falls within the first operating frequency band and the third operating frequency band is not overlapped with the second operating frequency band. A historical usage frequency corresponding to each of the multiple operating frequencies is obtained to obtain multiple historical usage frequencies. A target operating frequency is determined, where the historical usage frequency corresponding to the target operating frequency is a minimum historical usage frequency among the multiple historical usage frequencies. An operating frequency of the cellular communication module is adjusted to be the target operating frequency.

FIG. 5A is a schematic structural diagram illustrating a device for communication control provided in implementations of the disclosure. The device is applicable to an electronic device. The electronic device includes a cellular communication module, a LPWAN communication module, a primary module, a diversity module, a primary antenna, and a diversity antenna. The cellular communication module is coupled with the primary module to form a cellular primary RF channel, and the cellular communication module is coupled with the diversity module to form a cellular diversity RF channel. The LPWAN communication module is coupled with the diversity module to form an LPWAN RF channel, and the cellular primary RF channel is coupled with the primary antenna. As illustrated in FIG. 5A, the device includes a control unit 501 and a transmitting unit 502.

The control unit 501 is configured to couple the diversity antenna with the cellular diversity RF channel, on condition that the cellular communication module has a diversity requirement. The transmitting unit 502 is configured to transmit, through the cellular communication module, first feedback information to the LPWAN communication module, where the first feedback information indicates that the diversity antenna is occupied by the cellular diversity RF channel. The control unit 501 is further configured to control the LPWAN communication module to stop signal transmission or signal reception, in response to the first feedback information being received by the LPWAN communication module

FIG. 5B illustrates a variant structure of the device for communication control illustrated in FIG. 5A provided in implementations of the disclosure. Compared with the device in FIG. 5A, the device in FIG. 5B further includes an obtaining unit 503 and a determining unit 504.

The obtaining unit 503 is configured to obtain a target operation request, where the target operation request is received from a base station or triggered in response to a touch instruction. The determining unit 504 is configured to determine that the cellular communication module has the diversity requirement, in response to the target operation request being in a preset request list corresponding to the cellular communication module.

In at least one implementation, the electronic device further incudes a processor. The transmitting unit 502 configured to transmit, through the cellular communication module, the first feedback information to the LPWAN communication module is configured to: transmit, through the cellular communication module, the first feedback information to the processor; forward, through the processor, the first feedback information to the LPWAN communication module.

In at least one implementation, the control unit 501 is further configured to couple the diversity antenna with the LPWAN RF channel, on condition that the cellular communication module terminates usage of the diversity antenna. The transmitting unit 502 is further configured to transmit, through the cellular communication module, second feedback information to the LPWAN communication module, where the second feedback information indicates that the diversity antenna is released from the cellular diversity RF channel. The control unit 501 is further configured to control the LPWAN communication module to restore signal transmission or signal reception, in response to the second feedback information being received by the LPWAN communication module.

In at least one implementation, the obtaining unit 503 is further configured to obtain a first operating frequency band of the cellular communication module and a second operating frequency band of the LPWAN communication module in response to signal interference between the cellular primary RF channel and the LPWAN RF channel, on condition that the diversity antenna is coupled with the LPWAN RF channel. The determining unit 504 is further configured to determine multiple operating frequencies within a third operating frequency band, in response to that the second operating frequency band falls within the first operating frequency band, where the third operating frequency band falls within the first operating frequency band, and the third operating frequency band is not overlapped with the second operating frequency band. The determining unit 504 is further configured to obtain a historical usage frequency corresponding to each of the multiple operating frequencies to obtain multiple historical usage frequencies. The determining unit 504 is further configured to determine a target operating frequency, where the historical usage frequency corresponding to the target operating frequency is a minimum historical usage frequency among the multiple historical usage frequencies. The control unit 501 is further configured to adjust an operating frequency of the cellular communication module to be the target operating frequency.

In at least one implementation, the diversity requirement comprises at least one of: data transmission, incoming call reception, phone call, or network searching.

As can be seen, the device for communication control in implementations of the disclosure is applied to the electronic device. If the cellular communication module has the diversity requirement, the diversity antenna is coupled with the cellular diversity RF channel. The first feedback information is transmitted to the LPWAN communication module through the cellular communication module. When the LPWAN communication module receives the first feedback information, the LPWAN communication module is controlled to stop signal transmission or signal reception. In this way, by transmitting the first feedback information indicative of that the diversity antenna is occupied to the LPWAN communication module through the cellular communication module, the communication quality of the cellular communication module can be ensured when a cellular communication mode and the LPWAN communication mode can be used simultaneously.

It can be understood that the functions of each program module of the device for communication control of the implementation can be implemented according to the method in the method in the above implementations, and for the specific implementation process, reference may be made to the relevant description of the method in the above implementations, which are not be repeated herein.

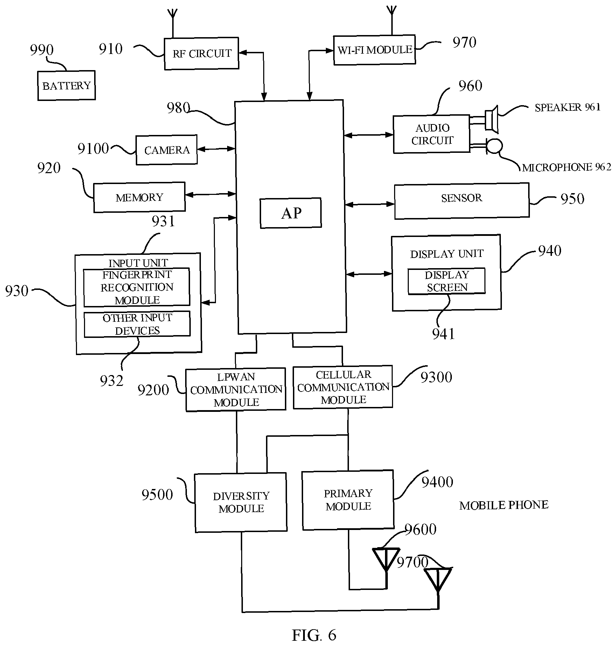

Implementations of the disclosure further provide an electronic device. As illustrated in FIG. 6, only parts related to implementations of the disclosure are illustrated for the convenience of description. For technical details not described, reference may be made to the method implementations of the disclosure. The electronic device may be any terminal device, such as a mobile phone, a tablet computer, a personal digital assistant (PDA), a point of sale terminal (POS), an on-board computer, and the like. The following describes a mobile phone as an example of the mobile terminal.

FIG. 6 is a block diagram illustrating a partial structure of a mobile phone related to a mobile terminal according to an implementation of the disclosure. Referring to FIG. 6, the mobile phone includes a radio frequency (RF) circuit 910, a memory 920, an input unit 930, a display unit 940, a sensor 950, an audio circuit 960, a wireless fidelity (Wi-Fi) module 970, a processor 980, a power supply 990, a camera 9100, an LPWAN communication module 9200, a cellular communication module 9300, a primary module 9400, a diversity module 9500, a primary antenna 9600, and a diversity antenna 9700, and other components. Those skilled in the art can understand that the structure of the mobile phone illustrated in FIG. 6 does not constitute any limitation on a mobile phone. The mobile phone configured to implement technical solutions of the disclosure may include more or fewer components than illustrated, or may combine certain components, or may adopt different arrangements of components.

In the following, various components of the mobile phone will be described in detail with reference to FIG. 6.

The RF circuit 910 is configured to receive or transmit information. Generally, the RF circuit 910 includes but is not limited to an antenna, at least one amplifier, a transceiver, a coupler, a low noise amplifier (LNA), a duplexer, and the like. In addition, the RF circuit 910 may also communicate with the network or other devices via wireless communication. The wireless communication herein may use any communication standard or protocol, which includes but is not limited to global system of mobile communication (GSM), general packet radio service (GPRS), code division multiple access (CDMA), wideband code division multiple access (WCDMA), long term evolution (LTE), E-mail, short messaging service (SMS), and so on.

The memory 920 is configured to store software programs and modules. The processor 980 is configured to execute various function applications and data processing of the mobile phone by running the software programs and the modules stored in the memory 920. The memory 920 may mainly include a program storage area and a data storage area. The program storage area may store an operating system, applications required for at least one function, and the like. The data storage area may store data created according to the use of the smart phone, and the like. In addition, the memory 920 may include a high-speed random access memory (RAM), and may further include a non-transitory memory such as at least one disk storage device, a flash device, or other non-transitory solid-state storage devices.

The input unit 930 is configured to receive input digital or character information and to generate key signal input associated with user setting and function control of the mobile phone. The input unit 930 may include a fingerprint recognition module 931 and other input devices 932. The fingerprint recognition module 931 can collect the fingerprint data of the user thereon. In addition to the fingerprint recognition module 931, the input unit 930 may further include other input devices 932. In on example, the other input devices 932 may include at least one of a touch screen, a physical keyboard, a function key (such as a volume control key, a switch key, etc.), a trackball, a mouse, a joystick, and the like.

The display unit 940 is configured to display information input by a user or information provided for the user or various menus of the mobile phone. The display unit 940 may include a display screen 941. In an example, the display screen 941 may be in the form of a liquid crystal display (LCD), an organic light-emitting diode (OLED), an inorganic light-emitting diode, or the like.

The mobile phone may further include at least one sensor 950, such as a light sensor, a motion sensor, a pressure sensor, a temperature sensor, and other sensors. The light sensor may include an ambient light sensor (also known as the light sensor) and a proximity sensor. The ambient light sensor may adjust backlight brightness of the mobile phone according to ambient lights to adjust the brightness of the display screen 941. The proximity sensor may turn off the display screen 941 and/or backlight when the mobile phone reaches near the ear. As a kind of the motion sensor, an accelerometer sensor can detect the magnitude of acceleration in all directions (typically three axes), and when the mobile phone is stationary, the accelerometer sensor can detect the magnitude and direction of gravity; the accelerometer sensor can also be applied to applications for identifying mobile-phone gestures (such as vertical and horizontal screen switching, magnetometer attitude calibration), or the accelerometer sensor can be used for vibration-recognition related functions (such as a pedometer, or a percussion) and so on. The mobile phone can also be equipped with a gyroscope, a barometer, a hygrometer, a thermometer, an infrared sensor, and other sensors, which will not be repeated herein.

The audio circuit 960, a speaker 961, and a microphone 962 may provide an audio interface between the user and the mobile phone. The audio circuit 960 may convert the received audio data into electrical signals and transfer the electrical signals to the speaker 961; thereafter the speaker 961 converts the electrical signals into sound signals for output. On the other hand, the microphone 962 converts the received sound signals into electrical signals, which will be received and converted into audio data by the audio circuit 960 to be output to the processor 980. The audio data is then processed and transmitted by the processor 980 via the RF circuit 910 to another mobile phone for example, or the audio data is output to the memory 920 for further processing.

Wi-Fi belongs to a short-range wireless transmission technology. With aid of the Wi-Fi module 970, the mobile phone may assist the user in E-mail receiving and sending, webpage browsing, access to streaming media, and the like. Wi-Fi provides users with wireless broadband Internet access. Although the Wi-Fi module 970 is illustrated in FIG. 6, it should be understood that the Wi-Fi module 970 is not essential to the mobile phone and can be omitted according to actual needs without departing from the essential nature of the disclosure.

The processor 980 is a control center of the mobile phone. The processor 980 is configured to connect various parts of the entire smart phone through various interfaces and lines, and to execute various functions of the smart phone and process data by running or executing software programs and/or modules stored in the memory 920 and invoking data stored in the memory 920, thereby monitoring the smart phone as a whole. In at least one example, the processor 980 may include at least one core processing unit. For example, the processor 980 can be integrated with an application processor (AP) and a modem processor, where the AP is mainly configured to handle and maintain an operating system, a user interface, applications, and so on, and the modem processor is mainly configured to process wireless communication. It will be appreciated that the modem processor mentioned above may not be integrated into the processor 980.

The mobile phone further includes a battery 990 that supplies power to various components. For instance, the battery 990 may be logically coupled to the processor 980 via a power management system to achieve management of charging, discharging, and power consumption through the power management system.

The mobile phone may further include a camera 9100. The camera 9100 includes a front camera and a rear camera. The front camera and the rear camera are used to capture images and videos, and transmit the captured images and videos to the processor 980 for processing.

The mobile phone may further include a Bluetooth module, which will not be elaborated herein.

In any of the foregoing implementations illustrated in FIG. 1B, FIG. 2, and FIG. 3, each operation or method may be implemented based on the structure of the mobile phone.

Implementations of the disclosure further provide a computer-readable storage medium. The computer-readable storage medium is configured to store computer programs for electronic data interchange. The computer programs, when executed, are operable with a computer to perform all or part of the operations of any of the methods described in the above-described method implementation. The computer includes an electronic device.

Implementations of the disclosure also provide a computer program product. The computer program product includes a non-transitory computer-readable storage medium storing computer programs. The computer programs are operable with a computer to perform all or part of the operations of any of the methods described in the above method implementations. The computer program product may be a software installation package. The computer may be an electronic device.

It is to be noted that, for the sake of simplicity, the foregoing method implementations are described as a series of action combinations, however, it will be appreciated by those skilled in the art that the disclosure is not limited by the sequence of actions described. According to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In the implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or components may be combined or may be integrated into another system, or some features may be ignored or not performed. In addition, coupling or communication connection between each illustrated or discussed component may be direct coupling or communication connection, or may be indirect coupling or communication connection among devices or units via some interfaces, and may be electrical connection, or other forms of connection.

The units described as separate components may or may not be physically separated, the components illustrated as units may or may not be physical units, that is, they may be in the same place or may be distributed to multiple network elements. All or part of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to perform all or part of the steps described in the various implementations of the disclosure. The memory includes various medium capable of storing program codes, such as a universal serial bus (USB) flash disk, a read-only memory (ROM), a RAM, a removable hard disk, a disk, a CD, or the like.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, a disk or a CD, and so on.

The foregoing illustrates the implementations of the disclosure in detail. The principle and implementations of the disclosure are illustrated by specific examples. The illustration of the above implementations is merely used to facilitate understanding of the methods and core concept of the disclosure. For a person skilled in the art, according to the concept of the disclosure, specific implementations and application ranges may be both changed. Based on the above, the disclosure shall not be understood to be limited to the specification.

## Claims

1. A method for communication control, being applicable to an electronic device, the electronic device comprising a cellular communication module, a low-power wide-area network (LPWAN) communication module, a primary module, a diversity module, a primary antenna, and a diversity antenna, wherein the cellular communication module is coupled with the primary module to form a cellular primary radio frequency (RF) channel, and the cellular communication module is coupled with the diversity module to form a cellular diversity RF channel, wherein the LPWAN communication module is coupled with the diversity module to form an LPWAN RF channel, and the cellular primary RF channel is coupled with the primary antenna, wherein the method comprises:
coupling the diversity antenna with the cellular diversity RF channel, on condition that the cellular communication module has a diversity requirement;
transmitting, by the cellular communication module, first feedback information to the LPWAN communication module, wherein the first feedback information is indicative of that the diversity antenna is occupied by the cellular diversity RF channel; and
controlling the LPWAN communication module to stop signal transmission or signal reception, in response to the first feedback information being received by the LPWAN communication module.

2. The method of claim 1, further comprising:
obtaining a target operation request, wherein the target operation request is received from a base station or triggered in response to a touch instruction; and
determining that the cellular communication module has the diversity requirement, in response to the target operation request being in a preset request list corresponding to the cellular communication module.

3. The method of claim 1 or 2, wherein the electronic device further comprises a processor, and transmitting, by the cellular communication module, the first feedback information to the LPWAN communication module comprises:
transmitting, by the cellular communication module, the first feedback information to the processor; and
forwarding, by the processor, the first feedback information to the LPWAN communication module.

4. The method of any of claims 1 to 3, further comprising:
coupling the diversity antenna with the LPWAN RF channel, in response to the cellular communication module terminating usage of the diversity antenna;
transmitting, by the cellular communication module, second feedback information to the LPWAN communication module, wherein the second feedback information indicates that the diversity antenna is released from the cellular diversity RF channel; and
controlling the LPWAN communication module to restore signal transmission or signal reception, in response to the second feedback information being received by the LPWAN communication module.

5. The method of claim 4, further comprising:
on condition that the diversity antenna is coupled with the LPWAN RF channel, obtaining a first operating frequency band of the cellular communication module and
a second operating frequency band of the LPWAN communication module, in response to signal interference between the cellular primary RF channel and the LPWAN RF channel;
determining a plurality of operating frequencies within a third operating frequency band, in response to the second operating frequency band falling within the first operating frequency band, wherein the third operating frequency band falls within the first operating frequency band, and the third operating frequency band is not overlapped with the second operating frequency band;
obtaining a historical usage frequency corresponding to each of the plurality of operating frequencies to obtain a plurality of historical usage frequencies;
determining a target operating frequency, wherein the historical usage frequency corresponding to the target operating frequency is a minimum historical usage frequency among the plurality of historical usage frequencies; and
adjusting an operating frequency of the cellular communication module to be the target operating frequency.

6. The method of claim 1 or 2, wherein the diversity requirement comprises at least one of: data transmission, incoming call reception, phone call, or network searching.

7. A device for communication control, being applicable to an electronic device, the electronic device comprising a cellular communication module, a low-power wide-area network (LPWAN) communication module, a primary module, a diversity module, a primary antenna, and a diversity antenna, wherein the cellular communication module is coupled with the primary module to form a cellular primary radio frequency (RF) channel, and the cellular communication module is coupled with the diversity module to form a cellular diversity RF channel, wherein the LPWAN communication module is coupled with the diversity module to form an LPWAN RF channel, and the cellular primary RF channel is coupled with the primary antenna, wherein the device comprises:
a control unit configured to couple the diversity antenna with the cellular diversity RF channel, on condition that the cellular communication module has a diversity requirement;
a transmitting unit configured to transmit, through the cellular communication module, first feedback information to the LPWAN communication module, wherein the first feedback information indicates that the diversity antenna is occupied by the cellular diversity RF channel;
the control unit being further configured to control the LPWAN communication module to stop signal transmission or signal reception, in response to the first feedback information being received by the LPWAN communication module.

8. The device of claim 7, further comprising:
an obtaining unit configured to obtain a target operation request, wherein the target operation request is received from a base station or triggered in response to a touch instruction; and
a determining unit configured to determine that the cellular communication module has the diversity requirement, in response to the target operation request being in a preset request list corresponding to the cellular communication module.

9. The device of claim 7 or 8, wherein the electronic device further comprises a processor, and the transmitting unit configured to transmit, through the cellular communication module, the first feedback information to the LPWAN communication module is configured to:
transmit, through the cellular communication module, the first feedback information to the processor; and
forward, through the processor, the first feedback information to the LPWAN communication module.

10. The device of any of claims 6 to 9, wherein
the control unit is further configured to couple the diversity antenna with the LPWAN RF channel, in response to the cellular communication module terminating usage of the diversity antenna;
the transmitting unit is further configured to transmit, through the cellular communication module, second feedback information to the LPWAN communication module, wherein the second feedback information indicates that the diversity antenna is released from the cellular diversity RF channel; and
the control unit is further configured to control the LPWAN communication module to restore signal transmission or signal reception, in response to the second feedback information being received by the LPWAN communication module.

11. The device of any of claims 6 to 9, wherein
the obtaining unit is further configured to obtain a first operating frequency band of the cellular communication module and a second operating frequency band of the LPWAN communication module in response to signal interference between the cellular primary RF channel and the LPWAN RF channel, on condition that the diversity antenna is coupled with the LPWAN RF channel;
the determining unit is further configured to determine a plurality of operating frequencies within a third operating frequency band, in response to that the second operating frequency band falls within the first operating frequency band, wherein the third operating frequency band falls within the first operating frequency band, and the third operating frequency band is not overlapped with the second operating frequency band;
the determining unit is further configured to obtain a historical usage frequency corresponding to each of the plurality of operating frequencies to obtain a plurality of historical usage frequencies;
the determining unit is further configured to determine a target operating frequency, wherein the historical usage frequency corresponding to the target operating frequency is a minimum historical usage frequency among the plurality of historical usage frequencies; and
the control unit is further configured to adjust an operating frequency of the cellular communication module to be the target operating frequency.

12. The device of claim 7 or 8, wherein the diversity requirement comprises at least one of: data transmission, incoming call reception, phone call, or network searching.

13. An electronic device, comprising a cellular communication module, a low-power wide-area network (LPWAN) communication module, a primary module, a diversity module, a primary antenna, a diversity antenna, and a processor, wherein the cellular communication module is coupled with the primary module to form a cellular primary radio frequency (RF) channel, and the cellular communication module is coupled with the diversity module to form a cellular diversity RF channel, wherein the LPWAN communication module is coupled with the diversity module to form an LPWAN RF channel, and the cellular primary RF channel is coupled with the primary antenna, wherein
the processor is configured to control the diversity antenna to be coupled with the cellular diversity RF channel, on condition that the cellular communication module has a diversity requirement;
the cellular communication module is configured to transmit first feedback information to the LPWAN communication module, wherein the first feedback information indicates that the diversity antenna is occupied by the cellular diversity RF channel; and
the processor is further configured to control the LPWAN communication module to stop signal transmission or signal reception, in response to the first feedback information being received by the LPWAN communication module.

14. The method of claim 1, wherein the processor is further configured to:
obtain a target operation request, wherein the target operation request is received from a base station or triggered in response to a touch instruction; and
determine that the cellular communication module has the diversity requirement, in response to the target operation request being in a preset request list corresponding to the cellular communication module.

15. The method of claim 1 or 2, wherein the cellular communication module configured to transmit the first feedback information to the LPWAN communication module is configured to:
transmit the first feedback information to the processor; wherein
the processor is configured to forward the first feedback information to the LPWAN communication module.

16. The method of any of claims 1 to 3, wherein
the processor is further configured to control the diversity antenna to be coupled with the LPWAN RF channel, in response to the cellular communication module terminating usage of the diversity antenna;
the cellular communication module is further configured to transmit second feedback information to the LPWAN communication module, wherein the second feedback information indicates that the diversity antenna is released from the cellular diversity RF channel; and
the processor is further configured to control the LPWAN communication module to restore signal transmission or signal reception, in response to the second feedback information being received by the LPWAN communication module.

17. The method of claim 4, wherein the processor is further configured to:
on condition that the diversity antenna is coupled with the LPWAN RF channel,
obtain a first operating frequency band of the cellular communication module and a second operating frequency band of the LPWAN communication module, in response to signal interference between the cellular primary RF channel and the LPWAN RF channel;
determine a plurality of operating frequencies within a third operating frequency band, in response to that the second operating frequency band falls within the first operating frequency band, wherein the third operating frequency band falls within the first operating frequency band, and the third operating frequency band is not overlapped with the second operating frequency band;
obtain a historical usage frequency corresponding to each of the plurality of operating frequencies to obtain a plurality of historical usage frequencies;
determine a target operating frequency, wherein the historical usage frequency corresponding to the target operating frequency is a minimum historical usage frequency among the plurality of historical usage frequencies; and
adjust an operating frequency of the cellular communication module to be the target operating frequency.

18. The method of claim 13 or 14, wherein the diversity requirement comprises at least one of:
data transmission, incoming call reception, phone call, or network searching.

19. An electronic device, comprising:
a cellular communication module;
a low-power wide-area network (LPWAN) communication module;
a primary module;
a diversity module;
a primary antenna;
a diversity antenna;
a processor;
a communication interface; and
a memory storing one or more programs, wherein the one or more programs are configured to be executed by the processor and comprise instructions for performing the method of any of claims 1 to 6.

20. A computer-readable storage medium storing computer programs which, when executed by a computer, are operable with the computer to perform the method of any of claims 1 to 6.
